(19) Europäisches Patentamt
European Patent Office
Office européen des brevets

(11) Veröffentlichungsnummer: **0 463 526 A1**

(12) # EUROPÄISCHE PATENTANMELDUNG

(21) Anmeldenummer: **91109868.9**

(51) Int. Cl.5: **C09B 43/42**, D06P 1/18

(22) Anmeldetag: **17.06.91**

(30) Priorität: **25.06.90 DE 4020117**

(43) Veröffentlichungstag der Anmeldung:
**02.01.92 Patentblatt 92/01**

(84) Benannte Vertragsstaaten:
**CH DE FR GB IT LI**

(71) Anmelder: **CASSELLA Aktiengesellschaft**
**Hanauer Landstrasse 526**
**W-6000 Frankfurt am Main 60(DE)**

(72) Erfinder: **Bühler, Ulrich, Dr.**
**Kastanienweg 8**
**W-8755 Alzenau(DE)**

(74) Vertreter: **Urbach, Hans-Georg, Dr. et al**
**CASSELLA AKTIENGESELLSCHAFT**
**Patentabteilung Hanauer Landstrasse 526**
**W-6000 Frankfurt am Main 60(DE)**

(54) **Monoazofarbstoff, seine Herstellung und Verwendung.**

(57) Der Monoazofarbstoff der Formel

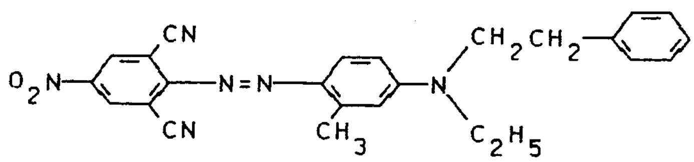

ist hervorragend zum Färben und Bedrucken von hydrophoben Fasern geeignet.

EP 0 463 526 A1

Die vorliegende Erfindung betrifft den wertvollen Monoazofarbstoff der Formel I

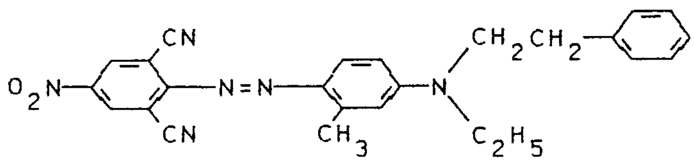

(I)

seine Herstellung und seine Verwendung zum Färben von hydrophoben Fasermaterialen.

Monoazofarbstoffe der allgemeinen Formel II

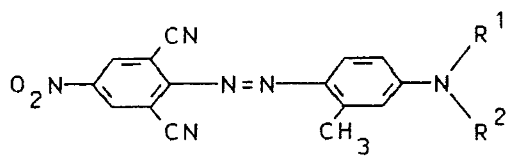

(II)

mit den unterschiedlichsten Resten $R^1$ und $R^2$ sind bereits bekannt. So ist z. B. der Farbstoff mit $R^1 = R^2 = C_2H_5$ in der DOS 28 34 386 und der Farbstoff mit $R^1 = n\text{-}C_4H_9$ und $R^2 = (CH_2)_2OCOCH_3$ in der GB 2.030.169 beschrieben. Die Farbstoffe mit $R^1 = CH_2CH{=}CH_2$ und $R^2 = (CH_2)_2CN$ bzw. $R^1 = CH{=}C(CH_3)_2$ und $R^2 = (CH_2)_2COOCH_3$ finden sich in der GB 1.313.209. In der DOS 19 62 402 ist der Farbstoff der Formel

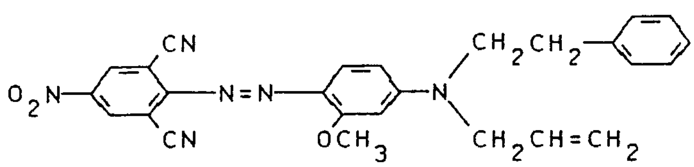

aufgeführt. Als dem erfindungsgemäßen Farbstoff nächst vergleichbare Farbstoffe werden die beiden Farbstoffe der Formel II mit $R^1 = CH_2C_6H_5$ und $R^2 = C_2H_5$ bzw. $R^1 = (CH_2)_3C_6H_5$ und $R^2 = C_2H_5$ als Einzelkomponenten in zwei Farbstoffmischungen der GB 2.108.141 beschrieben.

Es wurde nun überraschend gefunden, daß der erfindungsgemäße Farbstoff der Formel I den bisher bekannten Farbstoffen der Formel II in wichtigen färberischen Eigenschaften, wie z. B. Aufbau- oder Ausziehverhalten und in wichtigen Echtheiten, wie z. B. der Thermofixier- oder Lichtechtheit deutlich überlegen ist.

Die Herstellung des erfindungsgemäßen Farbstoffs erfolgt dadurch, daß man einen Azofarbstoff der Formel III

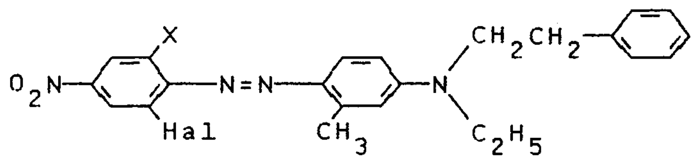

(III)

in der X für Cyan, Brom oder Chlor, vorzugsweise für Brom und Hal für Brom oder Chlor, vorzugsweise für Brom steht, in an sich bekannter Weise, z. B. nach den Angaben der DE-A- 1809920, der DE-A- 1809921, der GB-B- 1184825, der DE-B- 1544563, der DE-A- 2310745, der DE-B- 2456495, der DE-B- 2610675, der DE-A- 2724116, der DE-A- 2724117, der DE-A- 2834137, der DE-A- 2341109, der US-A- 3821195, der DE-A- 2715034 oder der DE-A- 2134896 einer nucleophilen Austauschreaktion unterwirft, wobei als nucleophiles Agenz das Cyanidion $CN^{\ominus}$ eingesetzt wird. Bei dieser Reaktion wird in dem Farbstoff der allgemeinen Formel III Hal gegen CN ausgetauscht.

Als Lösungsmittel für die Austauschreaktion werden inerte organische Lösungsmittel, wie z. B. Nitrobenzol oder Glycol-oder Diglycol-mono-methyl oder -mono-ethylether oder Mischungen solcher Lösungsmittel untereinander und mit tertiären organischen Stickstoffbasen, dipolare aprotische Lösungsmittel, wie z.B. N-Methylpyrrolidon, Pyridin, Dimethylformamid, Dimethylsulfoxyd oder Dicyan-dialkylthioether eingesetzt. Weiterhin sind als Medium für die Austauschreatkion Wasser oder wäßrige Systeme bestehend aus Wasser und einem mit Wasser unmischbaren organischen Lösungsmittel, wie z.B. Nitrobenzol, vorzugsweise in Gegenwart eines Netz- bzw. Dispergiermittels oder eines bekannten Phasentransferkatalysators oder aus Wasser und einem wasserlöslichen, inerten organischen Lösungsmittel, wie Ethylenglykol oder Dimethylformamid, geeignet.

Günstig wirkt sich auf die Austauschreaktion auch die Anwesenheit von organischen, basischen Stickstoffverbindungen, wie z.B. Pyridin und Pyridinbasen, aus.

Die Reaktionstemperaturen für die Austauschreaktion liegen normalerweise zwischen 20 und 150°C.

Das nucleophile Agenz $CN^{\ominus}$ wird der Reaktion in Form eines gegebenenfalls komplexen Metallcyanids, wie z.B. eines Alkyli- oder Erdalkalicyanids, Zinkcyanids, Alkalicyano-zinkats oder -ferrats, vorzugsweise aber in Form von Kupfer-I-cyanid oder eines Kupfer-I-cyanid ausbildenden Systems, zugefügt. Besonders bewährt ist der Einsatz einer Kombination von Alkalicyanid mit Kupfer-I-cyanid, wobei das Gewichtsverhältnis von Alkali und Kupfersalz in weiten Grenzen variiert werden kann.

Der gängige Bereich für das Gewichtsverhältnis Alkalicyanid:Kupfer-I-cyanid liegt bei 5:95 bis 95:5. Auch außerhalb dieser Grenzen ist noch die positive gegenseitige Beeinflussung der Komponenten feststellbar. Selbstverständlich ist es auch möglich, das Kupfer-I-cyanid seinerseits durch ein Kupfer-I-cyanid ausbildendes System, wie z.B. einer Kombination von Alkalicyanid mit einem anderen Kupfersalz, vorzugsweise Kupfer-I-salz, wie z.B. einem Kupfer-I-halogenid, zu ersetzen.

Die zur Herstellung des erfindungsgemäßen Farbstoffs erforderlichen Farbstoffe der Formel III können dadurch hergestellt werden, daß eine Diazoniumverbindung eines aromatischen Amins der allgemeinen Formel IV

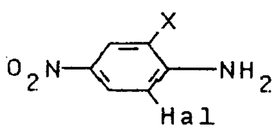

(IV)

in der X für Cyan, Chlor oder Brom und Hal für Chlor oder Brom steht, in an sich bekannter Weise mit einer Kupplungskomponente der Formel V

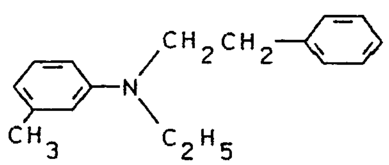

(V)

gekuppelt wird.

Aus den Aminen der allgemeinen Formel V werden die Diazoniumverbindungen in an sich bekannter Weise durch Einwirkung von salpetriger Säure oder anderen Nitrosoniumionen bildenden Systemen in einer Mineralsäure oder einem mineralsauren wäßrigen Medium, einer Niederalkancarbonsäure, wie z.B. Ameisensäure, Essigsäure oder Propionsäure oder deren Mischungen bei Temperaturen von -15°C bis 40°C erhalten.

Die Kupplung erfolgt ebenfalls in an sich bekannter Weise durch Vereinigung der erhaltenen Diazolösung mit einer Lösung der Kupplungskomponente bei Temperaturen von 0 bis 40°C, vorzugsweise 0 bis 25°C, in einem geeigneten Lösungsmittel, wie z.B. Alkanol mit 1 bis 4 C-Atomen, Dimethylformamid, vorzugsweise in mit Schwefelsäure, Salzsäure oder Phosphorsäure angesäuertem Wasser, oder einer gegebenenfalls wasserhaltigen Niederalkancarbonsäure oder einem Niederalkancarbonsäuregemisch.

In manchen Fällen kann es zweckmäßig sein, während der Kupplung den pH-Wert abzupuffern, z.B. durch Zugabe von Natriumacetat. Die Kupplung ist nach einigen Stunden beendet, und der Farbstoff der Formel II kann wie üblich isoliert und getrocknet werden.

Die benötigte Kupplungskomponente der Formel V ist bekannt. Sie läßt sich auch aus bekannten Handelsprodukten nach bekannten Verfahren herstellen.

Der erfindungsgemäße Farbstoff ist entweder allein oder im Gemisch mit anderen Dispersionsfarbstoffen vorzüglich zum Färben und Bedrucken von hydrophoben synthetischen Materialien geeignet. Als hydrophobe synthetische Materialien kommen z. B. in Betracht:
Cellulose-2 1/2-acetat, Cellulosetriacetat, Polyamide und hochmolekulare Polyester. Vorzugsweise wird der erfinddungsgemäße Farbstoff zum Färben und Bedrucken von Materialien aus hochmolekularen Polyestern, insbesondere solchen auf Basis von Polyethylenglykolterephthalaten oder deren Mischungen mit natürlichen Faserstoffen, oder von Materialen aus Cellulosetriacetat eingesetzt.

Die hydrophoben synthetischen Materialien können in Form von flächen- oder fadenförmigen Gebilden vorliegen und z.B. zu Garnen oder gewebten, gewirkten oder gestrickten Textilstoffen verarbeitet sein.

Das Färben des genannten Fasergutes mit dem erfindungsgemäßen Farbstoff kann in an sich bekannter Weise erfolgen, vorzugsweise aus wäßriger Suspension, gegebenenfalls in Gegenwart von Carriern, zwischen 80 bis ca. 110°C nach dem Ausziehverfahren oder nach dem HT-Verfahren im Färbeautoklav bei 110 bis 140°C, sowie nach dem sogenannten Thermofixierverfahren, wobei die Ware mit der Färbeflotte geklotzt und anschließend bei etwa 80 bis 230°C fixiert wird.

Das Bedrucken der genannten Materialien kann in an sich bekannter Weise so durchgeführt werden, daß der erfindungsgemäße Farbstoff in eine Druckpaste einverleibt wird und die damit bedruckte Ware zur Fixierung des Farbstoffs, gegebenenfalls in Gegenwart eines Carriers, bei Temperaturen zwischen 80 bis 230°C mit HT-Dampf, Druckdampf oder Trockenhitze behandelt wird.

Man erhält auf diese Weise sehr farbstarke brillante blaue Färbungen und Drucke mit sehr guten Echtheitseigenschaften, insbesondere einer guten Thermofixier- und Lichtechtheit.

Der erfindungsgemäße Farbstoff eignet sich auch zum Färben der vorstehend aufgeführten hydrophoben Materialien aus organischen Lösungsmitteln nach den hierbei bekannten Methoden. In den bei den obigen Applikationen eingesetzten Färbeflotten und Druckpasten soll der erfindungsgemäße Farbstoff in möglichst feiner Verteilung vorliegen. Die Feinverteilung des Farbstoffs erfolgt in an sich bekannter Weise dadurch, daß man den in der Fabrikation anfallenden Farbstoff zusammen mit Dispergiermitteln in einem flüssigen Medium, vorzugsweise in Wasser, aufschlämmt und die Mischung der Einwirkung von Scherkräften aussetzt, wobei die ursprünglich vorhandenen Farbstoffteilchen mechanisch so weit zerkleinert werden, daß eine optimale spezifische Oberfläche erreicht wird und die Sedimentation des Farbstoffs möglichst gering ist. Die Teilchengröße der Farbstoffe liegt im allgemeinen zwischen 0,5 und 5μm, vorzugsweise bei etwa 1 μm.

Die bei dem Mahlvorgang mitverwendeten Dispergiermittel können nichtionogen oder anionaktiv sein. Nichtionogene Dispergiermittel sind z. B. Umsetzungsprodukte von Alkylenoxiden, wie z. B. Ethylen- oder Propylenoxid mit alkylierbaren Verbindungen, wie z. B. Fettalkoholen, Fettaminen, Fettsäuren, Phenolen, Alkylphenolen und Carbonsäureamiden. Anionaktive Dispergiermittel sind beispielsweise Ligninsulfonate, Alkyl- oder Alkylarylsulfonate oder Alkyl-aryl-polyglykolethersulfate.

Die so erhaltenen Farbstoffzubereitungen sollen für die meisten Anwendungsweisen gießbar sein. Der Farbstoff- und Dispergiermittelgehalt ist daher in diesen Fällen limitiert. Im allgemeinen werden die Dispersionen auf einen Farbstoffgehalt bis zu 50 Gewichtsprozent und einen Dispergiermittelgehalt bis zu etwa 25 % eingestellt. Aus ökonomischen Gründen werden Farbstoffgehalte von 15 Gewichtsprozent meist nicht unterschritten.

Die Dispersionen können auch noch weitere Hilfsmittel enthalten, z.B. solche, die als Oxidationsmittel wirken, wie z.B. Natrium-m-nitrobenzolsulfonat oder fungicide Mittel, wie z.B. Natrium-o-phenyl-phenolat und Natriumpentachlorphenolat und insbesondere sogenannten "Säurespender" wie z.B. Butyrolacton, Monochloracetamid, Natriumchloracetat, Natriumdichloracetat, Na-Salz der 3-Chlorpropionsäure, Halbester der Schwefelsäure wie z.B. Laurylsulfat, Schwefelsäureester von oxethylierten und oxypropylierten Alkoholen wie z.B. Butylglykolsulfat.

Die so erhaltenen Farbstoffdispersionen können sehr vorteilhaft zum Ansatz von Druckpasten und Färbeflotten verwendet werden. Besondere Vorteile bieten sie z.B. bei den Kontinue-Verfahren, bei denen durch kontinuierliche Farbstoff-Einspeisung in die laufende Apparatur die Farbstoffkonzentration der Färbeflotten konstant gehalten werden muß.

Für gewisse Anwendungsbereiche werden Pulvereinstellungen bevorzugt. Diese Pulver enthalten den Farbstoff oder das Farbstoffgemisch, Dispergiermittel und andere Hilfsmittel, wie z.B. Netz-, Oxydations-, Konservierungs- und Entstaubungsmittel und die oben genannten "Säurespender".

Ein bevorzugtes Herstellungsverfahren für pulverförmige Farbstoffzubereitungen besteht darin, daß den oben beschriebenen flüssigen Farbstoffdispersionen die Flüssigkeit entzogen wird, z.B. durch Vakuumtrocknung, Gefriertrocknung, durch Trocknung auf Walzentrocknern, vorzugsweise aber durch Sprühtrocknung.

Zur Herstellung der Färbeflotten werden die erforderlichen Mengen der Farbstoffeinstellungen, die gemäß den obigen Angaben hergestellt wurden, mit dem Färbemedium, vorzugsweise mit Wasser, so weit verdünnt, daß sich für die Färbung ein Flottenverhältnis von 5:1 bis 50:1 ergibt. Zusätzlich werden den

Flotten im allgemeinen weitere Färbereihilfsmittel, wie Dispergier-, Netz- und Fixierhilfsmittel zugesetzt. Durch Zugabe von organischen und anorganischen Säuren wie Essigsäure, Bernsteinsäure, Borsäure oder Phosphorsäure wird ein pH-Wert von 4 bis 5, vorzugsweise von 4,5, eingestellt. Es ist vorteilhaft, den eingestellten pH-Wert abzupuffern und eine ausreichende Menge eines Puffersystems zuzusetzen. Ein vorteilhaftes Puffersystem ist z.B. das System Essigsäure/Natriumacetat.

Soll der Farbstoff für den Textildruck herangezogen werden, so werden die erforderlichen Mengen der Farbstoffeinstellungen in an sich bekannter Weise zusammen mit Verdickungsmitteln, wie z. B. Alkali-Alginaten oder dergleichen, und gegebenenfalls weiteren Zusätzen, wie z. B. Fixierbeschleunigern, Netzmitteln und Oxydationsmitteln, zu Druckpasten verknetet.

Die Erfindung wird durch die folgenden Beispiele näher erläutert. Prozentangaben sind Gewichtsprozente.

Beispiel 1

a) In eine Suspension aus 100 ml Dimethylsulfoxyd, 2,1 g Natriumcyanid und 7,1 g Kupfer-I-cyanid werden bei 70 bis 75°C 54,6 g des Farbstoffs der Formel VI

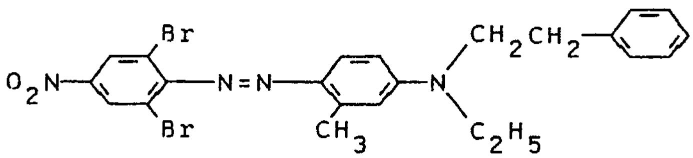

(VI)

eingetragen und 30 min bei dieser Temperatur gerührt. Dann wird die Temperatur im Verlauf von 30 min auf 110°Cangehoben und

der Ansatz anschließend langsam kaltgerührt, abgesaugt, mit 45 ml Dimethylsulfoxid, 7,5%iger wäßriger Ammoniaklösung und Wasser gewaschen und unter vermindertem Druck getrocknet. Man erhält so 39,8 g des Farbstoffs der Formel I, der bei 602 µm sein Absorptionsmaximum hat und sich in o-Dichlorbenzol mit blauer Farbe löst.

Der in obiger Stufe a eingesetzte Farbstoff VI kann wie folgt hergestellt werden:

b) Zu einem Gemisch aus 217,6 g N-Phenethyl-3-methyl-anilin, 900 ml Ethanol und 138 g Pottasche werden bei 60°C unter Rühren innerhalb von 3 h 277,3 g Diethylsulfat zugetropft. Dann wird 1 h bei 50°C nachgerührt, vom Salz abfiltriert, mit Ethanol nachgewaschen und das Ethanol abdestilliert.

Ausbeute: 217,1 g N-Ethyl-N-Phenethyl-3-methyl-anilin.

c) Das in der Stufe b enthaltene Produkt wird in 3 1 Eiswasser und 1450 ml Salzsäure zusammen mit 8 g Amidosulfosäure gelöst und bei 0 bis 5°C wird eine wie folgt hergestellte Diazoniumlösung zugetropft: Zu einer Mischung von 67,2 g Eis und 336 g Schwefelsäure werden bei 10 bis 15°C 151,7 g 2,5-Dibrom-4-nitroanilin eingetragen. Dann werden, ebenfalls bei 10 bis 15°C 160,3 g Nitrosylschwefelsäure innerhalb von 2 h zugetropft.

Während des Zutropfens der Diazoniumsalzlösung zu der Lösung der Kupplungskomponente wird die Temperatur durch Zugabe von 5,5 kg Eis/Wasser-Gemisch auf 0 bis 5°C gehalten.

Nach der Zugabe der Diazoniumlösung wird noch 1 h nachgerührt, dann der Farbstoff abgesaugt, neutral gewaschen und getrocknet.

Beispiel 2

0,6 g des Farbstoffs des Beispiels 1a werden in feindispergierter Form in 2000 g Wasser eingerührt. Die Dispersion wird mit Essigsäure und Natriumacetat auf einen pH-Wert 4,5 eingestellt und mit 2,0 g eines handelsüblichen Dispergiermittels auf Basis eines Naphthalinsulfonsäure-Formaldehyd-Kondensats versetzt.

In die so erhaltene Färbeflotte bringt man 100 g eines Polyestergewebes auf Basis von Polyethylenglykolterephthalats ein und färbt 1 h bei 130°C.

Nach anschließendem Spülen, reduktiver Nachbehandlung mit einer 0,2 %igen Natriumdithionitlösung während 15 min bei 70 bis 80°C, Spülen und Trocknen erhält man eine farbstarke blaue Färbung mit sehr guten coloristischen Eigenschaften, insbesondere sehr guter Thermofixierechtheit.

Beispiel 3

20 g des Farbstoffs von Beispiels 1a werden in feiner Verteilung einer Druckpaste, die 45,0 g Johannisbrotkernmehl, 6,0 g 3-nitrobenzolsulfonsaures Natrium und 3,0 g Zitronensäure auf 100 g enthält, einverleibt. Wird Polyester mit dieser Druckpaste bedruckt, das bedruckte Gewebe nach dem Trocknen 15 min bei 1,5 atü Dampfdruck gedämpft, geseift, erneut gespült und getrocknet, so erhält man einen farbstarken blauen Druck von sehr guten coloristischen Eigenschaften.

**Patentansprüche**

**1.** Monoazofarbstoff der Formel I

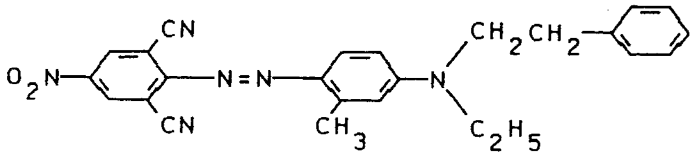

(I)

**2.** Verfahren zur Herstellung des Monoazofarbstoffs der Formel I,

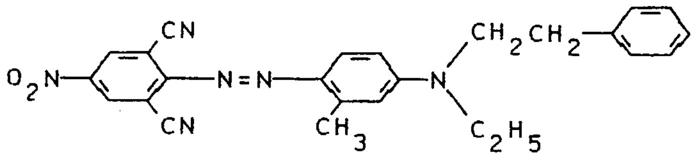

(I)

dadurch gekennzeichnet, daß man einen Monoazofarbstoff der Formel III

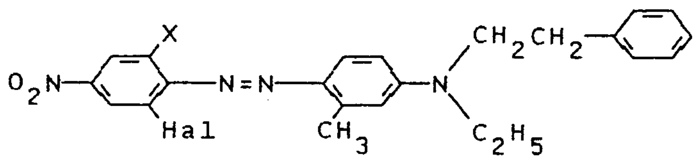

(III)

in der X für Cyan oder Hal und Hal für Chlor oder Brom steht, einer nukleophilen Austauschreaktion unterwirft, wobei als nukleophiles Agens das Cyanidion $CN^{\ominus}$ eingesetzt wird.

**3.** Verwendung des Monoazofarbstoffs der Formel I

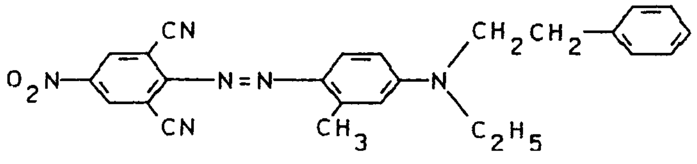

(I)

zum Färben und Bedrucken von hydrophoben Fasermaterialien und Mischungen dieser Fasermaterialien mit natürlichen Fasermaterialien.

Europäisches Patentamt

# EUROPÄISCHER RECHERCHENBERICHT

Nummer der Anmeldung

EP 91109868.9

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.⁵) |
|---|---|---|---|
| D,X | GB - A - 2 108 141 (YORKSHIRE CHEMICALS LIMITED) * Seite 1, Zeilen 6-14; Seite 4; Beispiele 12,13 jeweils Farbstoff B * -- | 1 | C 09 B 43/42<br>D 06 P 1/18 |
| D,X | DE - A1 - 2 715 034 (PRODUITS CHIMIQUES UGINE KUHLMANN) * Anspruch 1; Seite 17, letzte drei Zeilen; Seite 18, Zeile 1 - Seite 19, Zeile 13 * -- | 1-3 | |
| D,X | DE - A1 - 2 834 386 (BAYER AG) * Anspruch 1; Seite 7, Zeilen 7-17 * -- | 1,2 | |
| X | DE - A1 - 2 402 544 (BAYER AG) * Seite 1, Zeile 1 - Seite 3, Zeile 8 * -- | 1,2 | **RECHERCHIERTE SACHGEBIETE (Int. Cl.⁵)** |
| X | DE - A1 - 2 922 226 (PRODUITS CHIMIQUES UGINE KUHLMANN) * Ansprüche 1,6 * ---- | 1,2 | C 09 B<br>D 06 P |

Der vorliegende Recherchenbericht wurde für alle Patentansprüche erstellt.

| Recherchenort | Abschlußdatum der Recherche | Prüfer |
|---|---|---|
| WIEN | 16-09-1991 | HAUSWIRTH |

**KATEGORIE DER GENANNTEN DOKUMENTEN**

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82